# EUROPEAN PATENT APPLICATION

(11) **EP 4 009 611 A1**
(43) Date of publication of application: **08.06.2022**
(21) Application number: 21823720.4
(22) Date of filing: 03.06.2021
(51) Int. Cl.: H04L 65/40

(54) **SERVICE AUDITING NOTIFICATION METHOD, GATEWAY, ELECTRONIC DEVICE, AND READABLE MEDIUM**

(30) Priority: 10.10.2020 CN 202011081246
(71) Applicant: Baidu (China) Co., Ltd., 200041 Shanghai (CN)
(72) Inventor: LIU, Yuanxu, Shanghai 200041 (CN); ZHANG, Hao, Shanghai 200041 (CN); YU, Cong, Shanghai 200041 (CN); TAO, Ke, Shanghai 200041 (CN)
(74) Representative: Zimmermann, Tankred Klaus
(86) International application number: PCT/CN2021/098031
(87) International publication number: WO 2022/073354

(57) **Abstract**

The present disclosure provides a method of notifying of a business audit, which relates to a field of computer, and in particular to a cloud computing and cloud platform technology. The method is specifically implemented to include: transmitting a business audit request to an audit platform in response to an operation request of a user terminal; generating a to-be-issued message based on an audit task identification returned by the audit platform; generating an audit notifying message based on an audit result acquired and the to-be-issued message; and pushing the audit notifying message to the user terminal. The method is universal and may reduce a labor cost of a developer, reduce a code redundancy and improve a maintainability of a business code. The present disclosure further provides a gateway, an electronic device, and a readable medium.

## Description

### TECHNICAL FIELD

The present disclosure relates to a field of a computer technology, in particular to a cloud computing and cloud platform technology, and specifically to a method of notifying of a business audit, a gateway, an electronic device, and a readable medium.

### BACKGROUND

As an application that may be used without downloading and installing, an applet may save a time cost of a user and a memory space of a mobile phone, and greatly reduce a research and development cost and a promotion cost of a developer.

In order to enrich an applet capability, such as an applet package management, a basic information setting, an information flow/material search service, an order/payment service, a message service, etc., an applet developer and a third-party service provider may provide a variety of access and use methods, which may not only support an operation through a platform interface, but also enable a use of the applet capability by calling an open application programming interface (API) provided by a platform.

### SUMMARY

According to a first aspect, there is provided a method of notifying of a business audit, including: transmitting a business audit request to an audit platform in response to an operation request of a user terminal; generating a to-be-issued message based on an audit task identification returned by the audit platform; generating an audit notifying message based on an audit result acquired and the to-be-issued message; and pushing the audit notifying message to the user terminal.

According to a second aspect, there is provided a method of notifying of a business audit, including: receiving a business audit request, wherein the business audit request is a message transmitted by a gateway in response to an operation request of a user terminal; and acquiring and storing an audit result so that the gateway generates an audit notifying message based on the audit result and a to-be-issued message, wherein the to-be-issued message is generated by the gateway for the business audit request.

According to a third aspect, there is provided a gateway, including: a submission module configured to transmit a business audit request to an audit platform in response to an operation request of a user terminal, and generate a to-be-issued message based on an audit task identification returned by the audit platform; and a push module configured to generate an audit notifying message based on an audit result acquired and the to-be-issued message, and push the audit notifying message to the user terminal.

According to a fourth aspect, there is provided an electronic device, including: at least one processor; and a memory communicatively connected to the at least one processor, wherein the memory stores instructions executable by the at least one processor, and the instructions, when executed by the at least one processor, cause the at least one processor to implement any of the method of notifying of the business audit described above.

According to a fifth aspect, there is provided non-transitory computer-readable storage medium having computer instructions stored thereon, wherein the computer instructions allow a computer to implement any of the method of notifying of the business audit described above.

According to a sixth aspect, there is provided a computer program product containing a computer program, wherein the computer program, when executed by a processor, causes the processor to implement any of the method of notifying of the business audit described above.

The method of notifying of the business audit provided by the present disclosure may be implemented to transmit a business audit request to an audit platform in response to an operation request initiated by a user terminal, generate a to-be-issued message based on an audit task identification returned by the audit platform, generate an audit notifying message based on an audit result and the to-be-issued message, and push the audit notifying message to the user terminal. The method is universal and may support any type of business audit (such as an audit for the applet capability), and may further reduce a labor cost of the developer, reduce a code redundancy and improve a maintainability of a business code.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solution and do not constitute a limitation to the present disclosure.
FIG. 1 shows a schematic diagram of an application scenario of a method of notifying of a business audit provided by the embodiments of the present disclosure.
FIG. 2 shows a flowchart of a method of notifying of a business audit provided by the embodiments of the present disclosure.
FIG. 3 shows a flowchart of transmitting a business audit request to an audit platform in response to an operation request of a user provided by the embodiments of the present disclosure.
FIG. 4 shows a flowchart of pushing an audit notifying message to a user terminal provided by the embodiments of the present disclosure.
FIG. 5 shows a flowchart of a method of notifying of a business audit provided by the embodiments of the present disclosure.
FIG. 6 shows a functional block diagram of a gateway provided by the embodiments of the present disclosure.
FIG. 7 shows a functional block diagram of a submission module provided by the embodiments of the present disclosure.
FIG. 8 shows a functional block diagram of an authentication unit provided by the embodiments of the present disclosure.
FIG. 9 shows a functional block diagram of a push module provided by the embodiments of the present disclosure.
FIG. 10 shows a functional block diagram of another push module provided by the embodiments of the present disclosure.
FIG. 11 shows a functional block diagram of an audit platform provided by the embodiments of the present disclosure.
FIG. 12 shows a flowchart of a method of notifying of a business audit provided by the embodiments of the present disclosure.
FIG. 13 shows a block diagram of an electronic device for implementing the method of notifying of the business audit according to the embodiments of the present disclosure.

### DETAILED DESCRIPTION OF EMBODIMENTS

The following describes exemplary embodiments of the present disclosure with reference to the accompanying drawings, which include various details of the embodiments of the present disclosure to facilitate understanding, and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

In a case of no conflict, the embodiments in the present disclosure and the features in the embodiments may be combined with each other.

The term "and/or" as used here includes any and all combinations of one or more related listed items.

The terms used herein are only used to describe specific embodiments and are not intended to limit the present disclosure. As used herein, the singular forms "a" and "the" are also intended to include a plural form unless the context clearly indicates otherwise. It should also be understood that when terms "including" and/or "containing" are used in the specification, it means that the described features, wholes, steps, operations, elements and/or components are present, but do not exclude the presence or addition of one or more other features, wholes, steps, operations, elements, components and/or combinations thereof.

An applet mentioned in the embodiments of the present disclosure refers to an application that may run on an instant messaging application without downloading and installing, which is generally loaded in a third-party application. Most modifications or operations on the applet need to be manually audited by an audit platform. Therefore, when calling an open API gateway, the applet developer or the third-party service provider may fail to immediately acquire an audit result, and the audit result needs to be informed by an asynchronous notification mechanism.

However, a current open API gateway may not support the asynchronous notification mechanism. Therefore, in a research and development process of an applet capability, an asynchronous notification function needs to be customized for each operation scenario involving an audit, which may waste a research and development manpower, result in a code redundancy, and affect a maintainability of an overall server architecture. Moreover, because asynchronous notification codes developed by different developers do not have a unified mechanism to ensure a delivery of a notifying message, there may be a missing push of the notifying message, which may affect a use of the applet capability by the applet developer or the third-party service provider.

In view of the above-described problems existing in the open API gateway, the present disclosure provides a method of notifying of a business audit, which may be implemented to achieve a closed function loop of an API gateway call and an asynchronous notification, reduce a labor cost of the developer, reduce the code redundancy, and improve the maintainability of the business code.

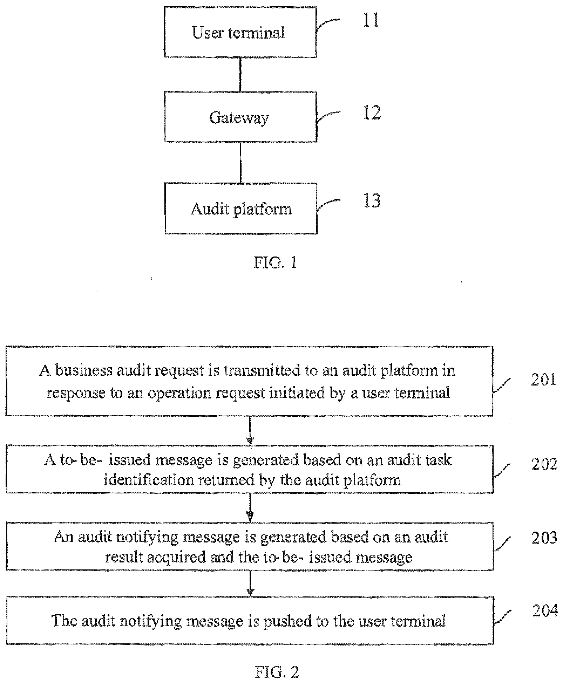

Exemplarily, FIG. 1 shows a schematic diagram of an application scenario of a method of notifying of a business audit provided by the embodiments of the present disclosure. As shown in FIG. 1, the application scenario may include at least one user terminal 11, a gateway 12, and an audit platform 13. The user terminal 11, the gateway 12 and the audit platform 13 may communicate through a network. The user terminal 11 may be a terminal used by the applet developer or the third-party service provider. The applet developer and the third-party service provider may develop one or more applets or modify an existing applet on the user terminal 11.

In some embodiments, the applet developer and the third-party service provider may modify the applet capability through an applet development platform. The applet development platform may be a platform operated independently by an operator of an application (APP) in which the applet is loaded, or may be a third-party applet development platform that has a cooperative relationship with the operator of the APP in which the applet is loaded. Optionally, the applet development platform is also called an applet developer tool, which is a tool for producing the applet and modifying the applet. A specific form of the applet development platform is not limited in the present disclosure.

The gateway 12 may receive an operation request for the applet capability submitted by the user terminal 11, such as publishing an applet package, modifying an applet name, etc., and transmit a business audit request to an audit platform based on the operation request, so as to audit whether the operation request for the applet meets relevant regulations or not; and further generate a to-be-issued message, so as to generate an audit notifying message subsequent to acquiring an audit result.

The audit platform 13 may audit whether the applet capability is legal or not according to a specific content of the business audit request, and store the audit result in a message queue. In practical application, the audit platform 13 may be a cloud server. The embodiments of the present disclosure do not limit a specific form of the audit platform, which may be determined according to the actual needs and will not be described in detail here.

The gateway 11 may acquire the audit result from the message queue, stitch the audit result and the to-be-issued message so as to obtain the audit notifying message, and then transmit the audit notifying message to the user terminal. The user may know the audit result from the user terminal.

Next, the technical solution of the present disclosure will be described in detail through specific embodiments. It should be noted that the following several specific embodiments may be combined with each other, and the same or similar concepts or processes may not be repeated in some embodiments.

In a first aspect, the embodiments of the present disclosure provide a method of notifying of a business audit, which may be applied to a gateway. The gateway may be an API gateway or other gateways that may be used to transmit a signal.

FIG. 2 shows a flowchart of a method of notifying of a business audit provided by the embodiments of the present disclosure. Referring to FIG. 2, the method of notifying of the business audit provided by the embodiments of the present disclosure may include following steps.

In step 201, a business audit request is transmitted to an audit platform in response to an operation request initiated by a user terminal.

The operation request is initiated by the user through the user terminal used by the user. The operation request may be a request for an applet business or a request for other applications.

In some embodiments, the operation request includes but is not limited to modifying a basic information (such as name, avatar, profile, industry category, etc.) of the applet, publishing an applet package, submitting a material distribution (search/recommendation feed), opening a payment service, and so on.

For ease of description, the embodiments of the present disclosure describe the operation request initiated by the user through the user terminal as the operation request initiated by the user terminal. The user terminal may be a mobile phone, a pocket PC, a personal computer (PC), an all-in-one PC or other terminals with a communication function.

In some embodiments, the user may be an applet developer or a third-party service provider. The applet developer is an owner or a manager of the applet. The third-party service provider is a third-party service provider authorized by the applet developer or a third-party service provider authorized by the applet manager. The applet developer or the applet manager may authorize all or part of use rights to the third-party service provider. The third-party service provider may manage the applet capability within an authorization of the applet developer or the applet manager.

In some embodiments, during the research and development process of developing and modifying the applet capability, the applet developer or the applet manager needs to submit an audit request to the audit platform, so that the audit platform may audit a legality of the applet capability.

In some embodiments, in order to enrich the applet capability such as an applet package management, a basic information setting, an information flow/material search service, an order/payment service, a message service, etc., the applet platform may provide a variety of access and use methods, which may not only support an operation through an applet platform interface, but also enable a use of the applet capability by calling an open API provided by the applet platform.

In some embodiments, the user may initiate the operation request to the gateway. The operation request includes but is not limited to modifying a basic information (such as name, avatar, profile, industry category, etc.) of the applet, publishing the applet package, submitting a material distribution (search/recommendation feed), opening a payment service, and so on. A user identification and an application identification may be carried in the operation request. In this embodiment, the application identification may be any form of applet identification.

The user identification is an identification used to identify a user identity, and the applet identification is an identification used to identify an applet identity. An operation type includes but is not limited to the applet package, the basic information setting, the information flow/material search service, the order/payment service, and the message service. An operation parameter is related to the operation type, and each operation type may correspond to a different parameter. For example, in a case of publishing the applet package, it is needed to provide a parameter of an applet package identification (package_id) and a parameter of an applet package version (package_version), and in a case of modifying the applet name, it is needed to provide a parameter of the applet name (app_name).

In some embodiments, in response to receiving the operation request initiated by the user terminal, the gateway may transmit a business audit request to the audit platform. The audit platform may audit the applet through a manual audit or a combination of machine audit and manual audit.

The audit request corresponds to the operation request. In some embodiments, a type of the audit request includes but is not limited to an applet package audit, a name audit, an industry category audit, an avatar and profile audit, a (recommendation/search) material audit, a payment account audit, and so on.

In step 202, a to-be-issued message is generated based on an audit task identification returned by the audit platform.

The audit task identification is an identification assigned by the audit platform for the business audit request.

In some embodiments, the audit platform may return the audit task identification to the gateway after receiving the business audit request from the gateway. After receiving the audit task identification, the gateway may generate the to-be-issued message.

In some embodiments, the to-be-issued message is stored in a to-be-issued message library, and the to-be-issued message contains a field including the audit task identification, the user identification, a time of submitting the business audit, an audit notification template, the operation parameter and an audit result message item.

The audit notification template may be pre-configured, and each operation type is separately configured with an audit notification template. Each audit notification template may include an audit success sub-template and an audit fail sub-template.

In some embodiments, a json structure may be adopted for the audit notification template. For example, a following format may be adopted for an applet package audit fail sub-template.

```
             {
               "appId": "${app_id}",
               "developerId":"${developer_id}",
               "tpDeveloperId": "${tp_developer_id}",
               "eventTime": "${audit_time}",
               "event": "PACKAGE_AUDIT_FAIL",
               "reason":"${reason}",
               "packageId":"${package_id)",
               "package Version" :"$ {package_version} "
             }
```

where a string in the form of ${...} represents a field to be filled. The field to be filled may be filled by extracting a corresponding field value from a submitted request parameter and an audit result message. For example, app_id represents the applet identification, developer_id and tp_developer_id respectively represent a developer identification and a third-party service provider identification, a reason field represents a reason for an audit fail, and package_id and package_version respectively represent an applet package identification and an applet package version.

In step 203, an audit notifying message is generated based on an audit result acquired and the to-be-issued message.

The audit result may include an audit success and an audit fail. For example, when the audit platform determines that the applet capability meets a set requirement, the audit result is the audit success. When the audit platform determines that the applet capability does not meet the set requirement, the audit result is the audit fail.

In some embodiments, the audit platform may perform a manual audit on a page of the audit platform by an auditor. When the auditor determines that the applet capability meets the set requirement, the audit result is the audit success. When the auditor determines that the applet capability does not meet the set requirement, the audit result is the audit fail.

In some embodiments, the gateway may stitch the audit result and the to-be-issued message, so as to generate the audit notifying message. For example, after acquiring the audit result, the gateway may fill the audit result into a corresponding field of the to-be-issued message, so as to obtain the audit notifying message.

For example, a following format may be adopted for the audit notifying message.

```
             { "app¬_Id": "1452365"
                "developer_Id": "17328232"
                "eventTime": "2019-01-14 12:45:10"
                "event": "PACKAGE_AUDIT_FAIL"
                "reason": "the name is not consistent with actual name of the opened applet"
                "package_Id":"745815"
                "packageVersion":" 1.3.46"
             }
```

where the applet identification is "1452365", the developer identification is "17328232", the time of submitting the audit is "2019-01-14 12:45:10", the type of audit is "PACKAGE_AUDIT_FAIL", the reason for the audit fail is "the name is not consistent with actual name of the opened applet", the applet package identification is "745815", and the applet package version is "1.3.46".

In step 204, the audit notifying message is pushed to the user terminal.

After generating the audit notifying message, the gateway may push the audit notifying message to the user terminal, and the user may view the audit result through the user terminal.

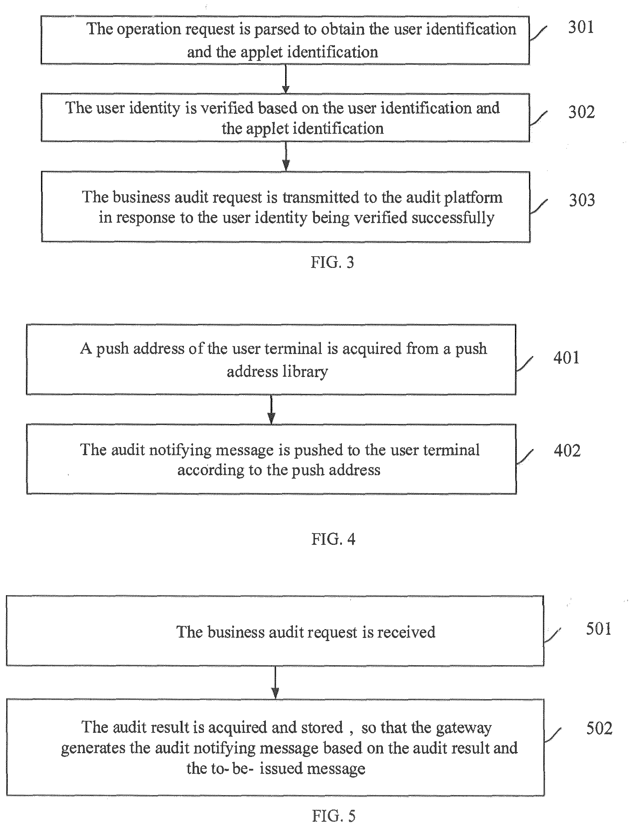

In some embodiments, as shown in FIG. 3, the transmitting a business audit request to an audit platform in response to an operation request of a user terminal may include following steps.

In step 301, the operation request is parsed to obtain the user identification and the applet identification.

In some embodiments, after receiving the operation request, the gateway may parse the operation request so as to obtain the user identity, the applet identification, the operation type and the operation parameter.

The operation type includes but is not limited to the applet package management, the basic information setting, the information flow/material search service, the order/payment service, and the message service. The operation parameter is related to the operation type, and each operation type may correspond to a different parameter.

For example, if the operation request initiated by the user terminal is a request to modify the applet name, the operation request may contain the user identification, the applet identification, the operation type (a name modification) and a name parameter (a new name of the applet).

In some embodiments, the operation parameter may further include a timestamp used to identify an authorization time for the third-party service provider, that is, the third-party service provider may develop and modify the applet within the authorization time.

In step 302, the user identity is verified based on the user identification and the applet identification.

In some embodiments, the user identity may be authenticated based on the user identification and the applet identification. For example, the gateway may verify a permission relationship with the applet identification according to the user identification. If the user does not have an operation permission for the applet corresponding to the applet identification, a no-permission message may be directly returned to the user terminal. If the user has the operation permission for the applet corresponding to the applet identification, a subsequent operation may be performed.

In step 303, the business audit request is transmitted to the audit platform in response to the user identity being verified successfully.

In response to the user identity being verified successfully, the gateway may transmit the business audit request to the audit platform. The business audit request may contain the user identification, the operation type (the name modification) and the name parameter (the new name of the applet).

In some embodiments, the audit platform may return an audit task identification to the gateway after receiving the business audit request. After receiving the audit task identification, the gateway may acquire an audit notification template corresponding to the operation type from the notification template library, generate the to-be-issued message based on the audit notification template and the audit task identification, and store the to-be-issued message in a to-be-issued message library. The to-be-issued message may contain the audit task identification, the user identification, the time of submitting the business audit, the audit notification template, the operation parameter and the audit result message item.

In some embodiments, the audit notification template is preset and stored in the notification template library. Each operation type may correspond to an audit notification template. The audit notification template is a template determined according to the operation type and is universal. By storing the audit notification template in the notification template library and extracting the audit notification template at any time when necessary, an efficiency of generating the to-be-issued message may be improved, and a probability of error may be reduced.

After receiving the operation request, the gateway may query the audit notification template library based on the type of the operation request so as to acquire an audit notification template matching the operation request, and then generate the to-be-issued message based on the audit task identification, the user identification, the time of submitting the business audit, the audit notification template, the operation parameter and the audit result message item.

In some embodiments, the audit platform transmits the audit result to a message queue after auditing a to-be-audited content in the business audit request. The message queue is a queue for storing the audit result, and each message in the message queue contains the audit task identification and the audit result.

In some embodiments, an audit result may be pushed to multiple parties at the same time. For example, both the applet developer and the third-party service provider need to obtain the audit result. In this case, the audit result needs to be transmitted to both the applet developer and the third-party service provider. The message queue may be used to isolate the gateway from the audit platform, so as to achieve a purpose of pushing the audit result to multiple parties at the same time.

In some embodiments, the gateway may subscribe to the audit result from the message queue, and stitch the audit result and the to-be-issued message, so as to obtain the audit notifying message.

For example, the gateway may acquire the audit result from the message queue according to the audit task identification and acquire the to-be-issued message from the to-be-issued message library, and stitch the audit result into the audit result message item in the to-be-issued message, so as to obtain the audit notifying message.

In practical application, if the audit notifying message is lost, the audit notifying message needs to be pushed to the user terminal again. By storing the audit result in the message queue, the gateway may subscribe to the audit result from the message queue multiple times, so that the audit notifying message may be pushed to the user terminal multiple times, which may effectively avoid a problem of missing push.

In some embodiments, the user terminal may fail to receive the audit notifying message due to a network failure or other reasons. Therefore, the gateway may push the audit notifying message to the user terminal at a preset time interval for preset push times. For example, the preset maximum push times may be 5, and the preset time interval may be 1 minute, 5 minutes, 15 minutes, 1 hour or 6 hours. The gateway may perform a first additional push one minute after a first push of the audit notifying message to the user terminal, perform a second additional push five minutes after the first additional push, perform a third additional push fifteen minutes after the second additional push, perform a fourth additional push one hour after the third additional push, and perform a fifth additional push six hours after the fourth additional push. By setting the push times and the push time interval, a push success rate may be improved.

In some embodiments, as shown in FIG. 4, the pushing the audit notifying message to the user terminal includes following steps.

In step 401, a push address of the user terminal is acquired from a push address library.

The push address library is a database for storing the push address. The address of the user terminal is stored in the push address library, so as to facilitate the gateway to push the audit notifying message to the user terminal according to the push address.

In some embodiments, the user may pre-store the address in the push address library through the user terminal, so that the gateway may call the address from the push address library when needed.

In step 402, the audit notifying message is pushed to the user terminal according to the push address.

The gateway may subscribe to the corresponding audit result from the message queue according to the audit task identification, acquire the corresponding to-be-issued message from the to-be-issued message library according to the audit task identification, and stitch the audit result and the to-be-issued message corresponding to the audit task identification, so as to obtain the audit notifying message. The gateway may acquire the push address of the user terminal from the push address library, and transmit the audit notifying message to the user terminal according to the push address.

In some embodiments, the gateway may push the audit notifying message to the user terminal multiple times according to the push address, so as to improve the push success rate.

In some embodiments, when the to-be-issued message in the to-be-issued message library has no record of the audit result for a long time, the gateway may directly query the audit platform to obtain the audit result, stitch the audit result and the to-be-issued message, and push the audit notifying message to the user terminal, so as to avoid a missing push of message.

The method of notifying of the business audit provided by the embodiment may be implemented to transmit a business audit request to an audit platform in response to an operation request initiated by a user terminal, generate a to-be-issued message based on an audit task identification returned by the audit platform, acquire an audit result and generate an audit notifying message based on the audit result and a to-be-issued message, and push the audit notifying message to the user terminal. The method may support an asynchronous notification mechanism for any applet capability, reduce a labor cost of the developer, reduce a code redundancy and improve a maintainability of a business code.

In a second aspect, the embodiments of the present disclosure provide a method of notifying of a business audit, which is applied to an audit platform.

FIG. 5 shows a flowchart of a method of notifying of a business audit provided by the embodiments of the present disclosure. Referring to FIG. 5, the method of notifying of the business audit provided by the embodiments of the present disclosure may include following steps.

In step 501, the business audit request is received.

The business audit request is transmitted by the gateway in response to the operation request initiated by the user terminal.

In some embodiments, the gateway may initiate the business audit request to the audit platform after receiving the operation request initiated by the user terminal. The operation request includes but is not limited to modifying the basic information (such as name, avatar, profile, industry category, etc.) of the applet, publishing the applet package, submitting the material distribution (search/recommendation feed), opening the payment service, and so on. The business audit request is based on the operation request, that is, the business audit request corresponds to the operation request. The type of the business audit request includes the applet package audit, the name audit, the industry category audit, the avatar and profile audit, the (feed/search) material audit, the payment account audit, and so on.

In step 502, the audit result is acquired and stored, so that the gateway generates the audit notifying message based on the audit result and the to-be-issued message.

The to-be-issued message is generated by the gateway for the business audit request.

In some embodiments, the audit platform performs the audit by an auditor. Therefore, after receiving the business audit request, the audit platform may display the business audit request to the auditor through a display device. The auditor may audit the audit type in the business audit request, and determine an audit success for an audit type meeting the relevant regulations, or determine an audit fail for an audit type not meeting the relevant regulations.

In some embodiments, after acquiring the audit result from the auditor, the audit platform may transmit the audit result to the message queue, so that the gateway may acquire the audit result when needed, or the message queue may actively push the audit result to the gateway.

In some embodiments, after receiving the business audit request, the audit platform may return the audit task identification to the gateway. The audit task identification is a unique identification of the audit task. In a subsequent step, the gateway may acquire the to-be-issued message and the audit result according to the audit task identification.

For example, the gateway may subscribe to the corresponding audit result from the message queue according to the audit task identification, acquire the corresponding to-be-issued message from the to-be-issued message library according to the audit task identification, and stitch the audit result and the to-be-issued message, so as to obtain the audit notifying message.

The method of notifying of the business audit provided by the embodiment may be implemented to receive the business audit request, receive the audit result and store the audit result, so that the gateway may generate the audit notifying message based on the audit result and the to-be-issued message; and push the audit notifying message to the user terminal. The method may support an asynchronous notification mechanism for any business audit, reduce the labor cost of the developer, reduce the code redundancy and improve the maintainability of the business code.

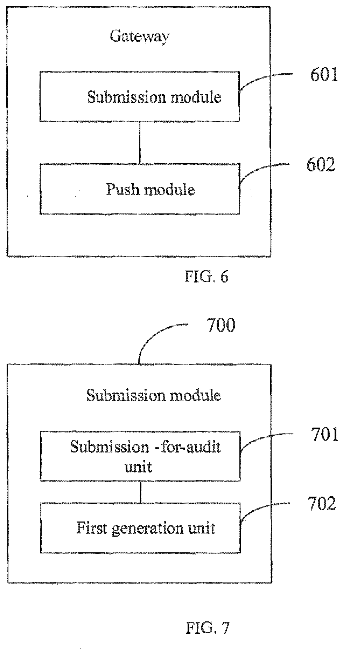

In a third aspect, the embodiments of the present disclosure provide a gateway. FIG. 6 shows a functional block diagram of a gateway provided by the embodiments of the present disclosure.

Referring to FIG. 6, the gateway provided by the embodiments of the present disclosure may include a submission module 601 and a push module 602.

The submission module 601 is configured to transmit a business audit request to an audit platform in response to an operation request of a user terminal, and generate a to-be-issued message based on an audit task identification returned by the audit platform.

The push module 602 is configured to generate an audit notifying message based on an audit result acquired and the to-be-issued message, and push the audit notifying message to the user terminal.

In some embodiments, the audit result is acquired from the message queue. The audit platform may store the audit result in the message queue after acquiring the audit result. After receiving the audit result, the message queue may transmit the audit result to the push module 602. Alternatively, the push unit 602 may actively pull the audit result from the message queue according to a preset condition. For example, a preset pull time may be from 8:00 to 18:00 every day, a pull time interval may be 30 minutes, then the push unit 602 may pull the audit result at the preset time interval during the preset time.

In some embodiments, as shown in FIG. 7, the submission module 700 may include a submission-for-audit unit 701 and a first generation unit 702.

The submission-for-audit unit 701 is configured to transmit the business audit request to the audit platform.

In some embodiments, the submission-for-audit unit 701 may transmit the business audit request to the audit platform based on the operation request initiated by the user terminal.

The user terminal may be a terminal used by the applet developer or the third-party service provider for developing the applet. The user may develop or modify the applet in order to enrich the applet capability such as the applet package management, the basic information setting, the information flow/material search service, the order/payment service, and the message service. All developments and modifications need to be audited by the audit platform.

The operation request includes but is not limited to modifying the basic information (such as name, avatar, profile, industry category, etc.) of the applet, publishing the applet package, submitting the material distribution (search/recommendation feed), opening the payment service, and so on.

The business audit request corresponds to the operation request, and different operation requests correspond to different business audit requests. The business audit request includes but is not limited to the applet package audit, the name audit, the industry category audit, the avatar and profile audit, the (recommendation/search) material audit, the payment account audit, and so on.

The first generation unit 702 is configured to generate the to-be-issued message based on the audit task identification returned by the audit platform.

In some embodiments, after receiving the business audit request from the gateway, the audit platform may return the audit task identification to the gateway. The audit task identification is an identification assigned by the audit platform for the business audit request. After the gateway receives the audit task identification, the first generation unit 702 may generate the to-be-issued message.

In some embodiments, the first generation unit 702 may acquire an audit notification template based on the type of the operation request, and generate the to-be-issued message based on the audit task identification, the user identification, the time of submitting the business audit, the audit notification template, the operation parameter and the audit result message item.

The user identification is the unique identification for representing the user identity. The time of submitting the business audit is a time when the submission unit submits the audit task to the audit platform. The audit notification template may be pre-configured, and each operation type is separately configured with an audit notification template. Each audit notification template may include an audit success sub-template and an audit fail sub-template. The operation parameter is a requested content in the operation request, and the operation parameter is different according to the operation type. For example, in a case of publishing the applet package, it is needed to provide the parameter of the applet package identification (package_id) and the parameter of the applet package version (package_version), and in a case of modifying the applet name, it is needed to provide the parameter of the applet name (app_name). The audit result message item is an item used to fill the audit result. In the to-be-issued message generated by the first generation unit 702, the audit result message item is empty.

In some embodiments, the submission module 601 may further include an authentication unit configured to authenticate an identity of the user terminal.

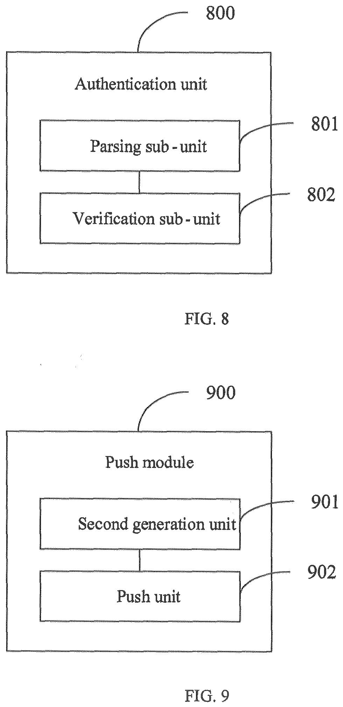

As shown in FIG. 8, the authentication unit 800 includes a parsing sub-unit 801 and a verification sub-unit 802.

The parsing sub-unit 801 is configured to parse the operation request so as to obtain the user identification and the applet identification.

In some embodiments, the operation request contains the user identification and the applet identification. The parsing sub-unit 801 may obtain the user identification and the applet identification by parsing the operation request.

The verification sub-unit 802 is configured to verify the user identity based on the user identification and the applet identification.

In some embodiments, the verification sub-unit 802 may verify the permission relationship with the applet identification according to the user identification. If the user does not have an operation permission for the applet corresponding to the applet identification, a no-permission message may be directly returned to the user terminal. If the user has the operation permission for the applet corresponding to the applet identification, a subsequent operation may be performed.

As shown in FIG. 9, the push module 900 includes a second generation unit 901 and a push unit 902.

The second generation unit 901 is configured to generate the audit notifying message based on the audit result acquired and the to-be-issued message.

The audit result may include the audit success and the audit fail. When an audit criterion is met, the audit platform may obtain the audit result of the audit success. When the audit criterion is not met, the audit platform may obtain the audit result of the audit fail.

In some embodiments, after obtaining the audit result, the second generation unit 901 may fill the audit result into the audit notifying message item in the to-be-issued message, so as to generate the audit notifying message.

The push unit 902 is configured to push the audit notifying message to the user terminal.

In some embodiments, the push unit 902 may acquire the address of the developer or the address of the third-party service provider from the push address library, and push the audit notifying message to the developer or the third-party service provider.

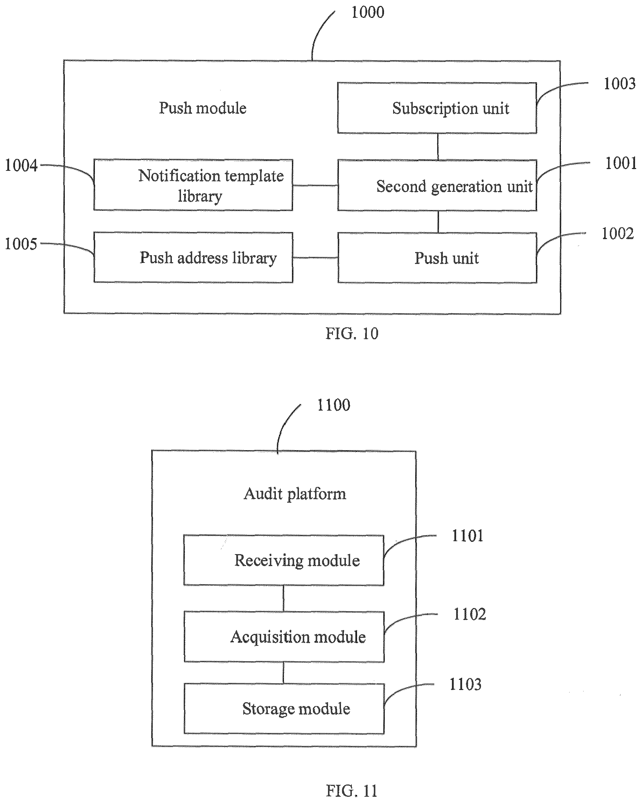

In some embodiments, as shown in FIG. 10, a push module 1000 includes a second generation unit 1001, a push unit 1002 and a subscription unit 1003. A principle and a function of the second generation unit 1001 and the push unit 1002 are the same as those of the second generation unit 901 and the push unit 902, which will not be repeated here.

The subscription unit 1003 is configured to subscribe to the audit result from the message queue, and transmit the audit result to the second generation unit.

It should be noted that the message queue is a queue for storing the audit result. The message queue may be provided on the audit platform or in the gateway, or may be provided independent of the audit platform and the gateway. The message queue may be used to decouple the audit platform and the gateway, so as to achieve the purpose of one-push multi-party-consumption.

In some embodiments, the gateway may further include a notification template library 1004 configured to store the audit notification template. The audit notification template may be pre-configured and stored in the notification template library 1004. The audit notification template matches the type of the operation request, and each operation type may correspond to two audit notification templates, including an audit success template and an audit fail template. An arrangement form of the audit success template and the audit fail template has been mentioned in a part of method of the present disclosure and will not be repeated here.

It should be noted that the notification template library 1004 may be provided in the gateway or in other units or modules independent of the gateway, as long as the notification template may be stored and the submission module and the push module are allowed to access the notification template library.

The push address library 1005 is configured to store the push address of the user terminal. The push address is pre-configured by the user to receive a notification.

In some embodiments, the applet developer and the third-party service provider may pre-arrange their respective addresses in the push address library, so that the push module may acquire the address of the applet developer or the address of the third-party service provider when needed.

It should be noted that the push address library 1005 may be provided in the gateway or in other units or modules independent of the gateway, as long as the address may be stored and the submission module and the push module are allowed to access the push address library.

The gateway provided by the embodiment may be implemented to use the submission module to transmit the business audit request to the audit platform in response to receiving the operation request of the user terminal, and generate the to-be-issued message based on the audit task identification returned by the audit platform; and use the push module to generate the audit notifying message based on the audit result acquired and the to-be-issued message, and push the audit notifying message to the user terminal. The gateway is universal and may support any type of business audit (such as the audit for the applet capability), and may further reduce the labor cost of the developer, reduce the code redundancy and improve the maintainability of the business code.

In a fourth aspect, the embodiments of the present disclosure provide an audit platform, which may audit a business of an application, such as a business of an applet.

FIG. 11 shows a functional block diagram of an audit platform provided by the embodiments of the present disclosure. As shown in FIG. 11, the audit platform 1100 includes a receiving module 1101, an acquisition module 1102, and a storage module 1103,

The receiving module 1101 is configured to receive the business audit request.

The business audit request is a message transmitted by the gateway in response to the operation request of the user terminal.

The acquisition module 1102 is configured to acquire the audit result.

In some embodiments, the audit platform may perform a manual audit by an auditor. The audit result is a result obtained after the audit request is audited by the auditor. For example, the audit platform may display the audit request, that is, an audit item in the audit request, to the auditor. The auditor may audit the audit item, obtain the audit result, and transmit the audit result to the audit platform.

In some embodiments, the audit platform may perform the audit in other ways, such as by a combination of manual audit and machine audit.

The storage module 1103 is configured to store the audit result.

In some embodiments, the storage module 1103 may store the audit result in the form of a message queue. The storage module 1103 may be provided on the audit platform or in other modules or units independent of the audit platform.

In some embodiments, the audit platform may further include a task identification generation module configured to return the audit task identification to the gateway. The audit task identification is the unique identification of the audit task.

The audit platform provided by the embodiments of the present disclosure may use the receiving module to receive the business audit request, use the acquisition module to acquire the audit result, and use the storage module to store the audit result. The audit platform may audit any type of business, reduce the labor cost of a gateway developer, reduce the code redundancy, and improve the maintainability of the business code.

In order to better understand the method of notifying of the business audit provided by the embodiments of the present disclosure, the method of notifying of the business audit will be further introduced below in combination with the user terminal, the gateway and the audit platform.

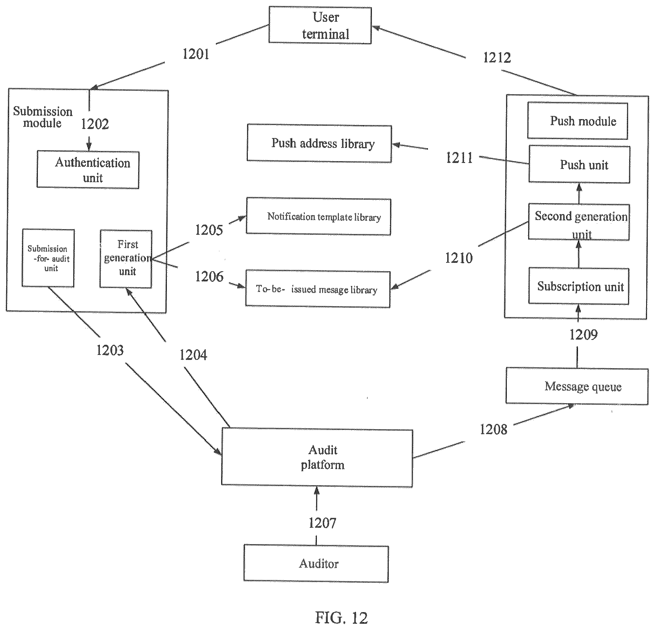

FIG. 12 shows a flowchart of a method of notifying of a business audit provided by the embodiments of the present disclosure. As shown in FIG. 12, the method of notifying of the business audit includes following steps.

In step 1201, the user terminal transmits the operation request to the submission module of the gateway.

The operation request may contain the user identification, the applet identification, the operation type (the name modification) and the name parameter (the new name of the applet).

In step 1202, the gateway authenticates the user identity.

In this embodiment, the gateway may parse the user identification and the applet identification from the operation request, and verify the permission relationship with the applet identification according to the user identification. When the user identification does not have the operation permission, a verification fail message may be returned to the user terminal. When the user identification has the operation permission, a verification success message may be returned to the user terminal and a subsequent step may be performed; or the subsequent step may be performed directly without returning the verification success message to the user terminal.

In step 1203, the submission-for-audit unit of the gateway transmits the business audit task to the audit platform.

The business audit task is an audit task obtained by the gateway based on the operation request. The business audit task may contain the applet identification, the operation type (the name modification) and the name parameter. In response to the user identity being verified successfully, the gateway may transmit the business audit request to the audit platform.

In step 1204, the audit platform returns the audit task identification to the gateway.

In this embodiment, after receiving the business audit task, the audit platform may assign a unique identification to the business audit task for use in a subsequent process.

In step 1205, the gateway acquires the audit notification template from the notification template library.

In this embodiment, the audit notification template is preset by the developer or the third-party service provider and stored in the notification template library.

In step 1206, the to-be-issued message is generated based on the audit task identification, the user identification, the time of submitting the business audit, the audit notification template, the operation parameter and the audit result message item.

In this embodiment, the gateway may acquire the audit notification template from the notification template library based on the audit task identification returned by the audit platform, and generate the to-be-issued message by combining the user identification transmitted by the user terminal, the time of submitting the business audit, the operation parameter and the audit result message item.

In step 1207, the audit platform receives the audit result from the auditor.

In this embodiment, the audit platform may display the operation parameter to the auditor, and the auditor may audit the business audit request according to the operation parameter and transmit the audit result to the audit platform.

In step 1208, the audit platform stores the audit result in the message queue.

In step 1209, the gateway acquires the audit result from the message queue.

In step 1210, the gateway acquires the corresponding to-be-issued message from the to-be-issued message library according to the audit task identification, and stitches the audit result and the to-be-issued message, so as to obtain the notifying message.

In step 1211, the gateway acquires the push address of the user terminal from the push address library.

In this embodiment, the push address of the user terminal is pre-configured in the push address library by the user.

In step 1212, the gateway pushes the notifying message to the user terminal according to the push address.

According to the embodiments of the present disclosure, the present disclosure further provides an electronic device and a readable storage medium.

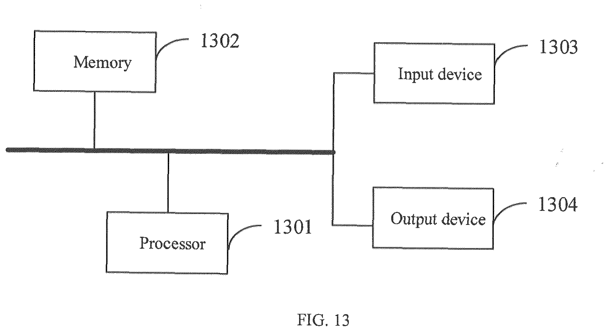

FIG. 13 shows a block diagram of an electronic device for implementing the method of notifying of the business audit according to the embodiments of the present disclosure. As shown in FIG. 13, the electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 13, the electronic device may include one or more processors 1301, a memory 1302, and interface(s) for connecting various components, including high-speed interface(s) and low-speed interface(s). The various components are connected to each other by using different buses, and may be installed on a common motherboard or installed in other manners as required. The processor may process instructions executed in the electronic device, including instructions stored in or on the memory to display graphical information of GUI (Graphical User Interface) on an external input/output device (such as a display device coupled to an interface). In other embodiments, a plurality of processors and/or a plurality of buses may be used with a plurality of memories, if necessary. Similarly, a plurality of electronic devices may be connected in such a manner that each device providing a part of necessary operations (for example, as a server array, a group of blade servers, or a multi-processor system). In FIG. 13, a processor 1301 is illustrated by way of example.

The memory 1302 is a non-transitory computer-readable storage medium provided by the present disclosure. The memory stores instructions executable by at least one processor, to cause the at least one processor to perform the method of notifying of the business audit provided in the present disclosure. The non-transitory computer-readable storage medium of the present disclosure stores computer instructions for allowing a computer to perform the method of notifying of the business audit provided in the present disclosure.

The memory 1302, as a non-transitory computer-readable storage medium, may be used to store non-transitory software programs, non-transitory computer-executable programs and modules, such as program instructions/modules corresponding to the method of notifying of the business audit in the embodiments of the present disclosure. The processor 1301 executes various functional applications and data processing of the server by executing the non-transient software programs, instructions and modules stored in the memory 1302, thereby implementing the method of notifying of the business audit in the embodiments of the method mentioned above.

The memory 1302 may include a program storage area and a data storage area. The program storage area may store an operating system and an application program required by at least one function. The data storage area may store data etc. generated by using the electronic device according to the method of notifying of the audit. In addition, the memory 1302 may include a high-speed random access memory, and may further include a non-transitory memory, such as at least one magnetic disk storage device, a flash memory device, or other non-transitory solid-state storage devices. In some embodiments, the memory 1302 may optionally include a memory provided remotely with respect to the processor 1301, and such remote memory may be connected through a network to the electronic device. Examples of the above-mentioned network include, but are not limited to the Internet, intranet, local area network, mobile communication network, and combination thereof.

The electronic device for implementing the method of notifying of the business audit may further include an input device 1303 and an output device 1304. The processor 1301, the memory 1302, the input device 1303 and the output device 1304 may be connected by a bus or in other manners. In FIG. 13, the connection by a bus is illustrated by way of example.

The input device 1303 may receive input information of numbers or character, and generate key input signals related to user settings and function control of the electronic device for implementing the method of notifying of the business audit, such as a touch screen, a keypad, a mouse, a track pad, a touchpad, a pointing stick, one or more mouse buttons, a trackball, a joystick, and so on. The output device 1304 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

These computing programs (also referred as programs, software, software applications, or codes) include machine instructions for a programmable processor, and may be implemented using high-level programming languages, object-oriented programming languages, and/or assembly/machine languages. As used herein, the terms "machine-readable medium" and "computer-readable medium" refer to any computer program product, apparatus and/or device (for example, magnetic disk, optical disk, memory, programmable logic device (PLD)) for providing machine instructions and/or data to a programmable processor, including a machine-readable medium for receiving machine instructions as machine-readable signals. The term "machine-readable signal" refers to any signal for providing machine instructions and/or data to a programmable processor.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), arid the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other.

The embodiments of the present disclosure provide a computer-readable medium having a computer program stored thereon, and the program, when executed by a processor, causes the processor to implement any of the method of notifying of the business audit described above.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of notifying of a business audit, comprising:
transmitting a business audit request to an audit platform in response to an operation request of a user terminal;
generating a to-be-issued message based on an audit task identification returned by the audit platform;
generating an audit notifying message based on an audit result acquired and the to-be-issued message; and
pushing the audit notifying message to the user terminal.

2. The method of claim 1, wherein the transmitting a business audit request to an audit platform in response to an operation request of a user terminal comprises:
parsing the operation request so as to obtain a user identification and an applet identification;
verifying a user identity based on the user identification and the applet identification; and
transmitting the business audit request to the audit platform in response to the user identity being verified successfully.

3. The method of claim 1, wherein the generating a to-be-issued message based on an audit task identification returned by the audit platform comprises:
acquiring an audit notification template matching an operation type of the operation request from a notification template library based on the operation type of the operation request; and
generating the to-be-issued message based on the audit notification template and the audit task identification.

4. The method of claim 3, further comprising: subsequent to generating the to-be-issued message based on the audit notification template,
storing the to-be-issued message in a to-be-issued message library.

5. The method of claim 4, wherein the generating an audit notifying message based on an audit result acquired and the to-be-issued message comprises:
acquiring the to-be-issued message associated with the audit task identification from the to-be-issued message library based on the audit task identification; and
stitching the audit result and the to-be-issued message so as to generate the audit notifying message.

6. The method of claim 1, wherein the to-be-issued message contains a field comprising an audit task identification, a user identification, an operation parameter, a time of submitting the business audit request, an audit notification template and an audit result message item; the audit notification template matches the operation type; and the audit result message item is a field for filling in the audit result.

7. The method of claim 1, wherein the audit result is acquired from a message queue for storing the audit result.

8. The method of claim 1, wherein the pushing the audit notifying message to the user terminal comprises:
acquiring a push address of the user terminal from a push address library; and
pushing the audit notifying message to the user terminal according to the push address.

9. The method of claim 1, wherein the pushing the audit notifying message to the user terminal comprises:
pushing the audit notifying message to the user terminal at a preset time interval for a preset push times.

10. A method of notifying of a business audit, comprising:
receiving a business audit request, wherein the business audit request is a message transmitted by a gateway in response to an operation request of a user terminal; and
acquiring and storing an audit result so that the gateway generates an audit notifying message based on the audit result and a to-be-issued message, wherein the to-be-issued message is generated by the gateway for the business audit request.

11. The method of claim 10, wherein the acquiring and storing an audit result comprises:
receiving the audit result and storing the audit result in a message queue.

12. The method of claim 10, further comprising: subsequent to receiving the business audit request,
returning an audit task identification to the gateway, wherein the audit task identification is a unique identification of an audit task.

13. A gateway, comprising:
a submission module configured to transmit a business audit request to an audit platform in response to an operation request of a user terminal, and generate a to-be-issued message based on an audit task identification returned by the audit platform; and
a push module configured to generate an audit notifying message based on an audit result acquired and the to-be-issued message, and push the audit notifying message to the user terminal.

14. The gateway of claim 13, wherein the submission module comprises:
a submission-for-audit unit configured to transmit the business audit request to the audit platform; and
a first generation unit configured to generate the to-be-issued message based on the audit task identification returned by the audit platform.

15. The gateway of claim 14, wherein the submission module further comprises:
a parsing unit configured to parse the operation request so as to obtain a user identification and an applet identification; and
a verification unit configured to verify a user identity based on the user identification and the applet identification.

16. The gateway of claim 13, wherein the push module comprises:
a second generation unit configured to generate the audit notifying message based on the audit result acquired and the to-be-issued message; and
a push unit configured to push the audit notifying message to the user terminal.

17. The gateway of claim 16, wherein the push module further comprises:
a subscription unit configured to subscribe to the audit result from a message queue for storing the audit result, and transmit the audit result to the second generation unit.

18. The gateway of claim 13, further comprising:
a notification template library configured to store an audit notification template matching a type of the operation request; and
a push address library configured to store a push address of the user terminal, wherein the push address is pre-configured by a user to receive a notification.

19. An electronic device, comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 9 or the method of any one of claims 10 to 12.

20. A non-transitory computer-readable storage medium having computer instructions stored thereon, wherein the computer instructions allow a computer to implement the method of any one of claims 1 to 9 or the method of any one of claims 10 to 12.

21. A computer program product containing a computer program, wherein the computer program, when executed by a processor, causes the processor to implement the method of any one of claims 1 to 9 or the method of any one of claims 10 to 12.
